(19) Europäisches Patentamt
European Patent Office
Office européen des brevets

(11) **EP 4 682 587 A1**

(12) **EUROPEAN PATENT APPLICATION**
published in accordance with Art. 153(4) EPC

(43) Date of publication:
**21.01.2026  Bulletin 2026/04**

(21) Application number: **23927863.3**

(22) Date of filing: **17.03.2023**

(51) International Patent Classification (IPC):
**G01S 17/08** $^{(2006.01)}$

(52) Cooperative Patent Classification (CPC):
**G01S 17/08**

(86) International application number:
**PCT/CN2023/082039**

(87) International publication number:
**WO 2024/192544 (26.09.2024 Gazette 2024/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Shenzhen Yinwang Intelligent
Technologies Co., Ltd.
Shenzhen, Guangdong 518110 (CN)**

(72) Inventors:
• **HUA, Kangjian
  Shenzhen, Guangdong 518129 (CN)**
• **LIU, Jun
  Shenzhen, Guangdong 518129 (CN)**

(74) Representative: **Gill Jennings & Every LLP
The Broadgate Tower
20 Primrose Street
London EC2A 2ES (GB)**

(54) **DETECTION APPARATUS AND TERMINAL**

(57) A detection apparatus and a terminal can be used in detection, intelligent driving, and other fields. A scanning module of the detection apparatus includes at least three reflective surfaces and at least two end surfaces. The at least three reflective surfaces are perpendicular to the at least two end surfaces respectively. The scanning module is a polygon with different angles. At least two included angles between the at least three reflective surfaces are different. A transmitting module of the detection apparatus may transmit a first laser beam through a first reflective surface of the scanning module. A receiving module of the detection apparatus may receive the returned first laser beam through a second reflective surface of the scanning module. Because the scanning module has at least two different included angles, a divergence field of view of the first laser beam and a receiving field of view of the receiving module have different overlapping starting positions, and there are two different overlapping regions in one scanning cycle, expanding a scanning range without providing a blind-zone coverage laser beam, that is, without adding an additional component and without consuming ranging energy, thereby reducing difficulty in manufacturing the detection apparatus and improving ranging effect.

FIG. 3

EP 4 682 587 A1

# EP 4 682 587 A1

**Description**

## TECHNICAL FIELD

This application relates to the field of lidar technologies, and in particular, to a detection apparatus and a terminal.

## BACKGROUND

With development of information technologies, detection technologies develop rapidly, and various detection apparatuses bring great convenience to people's life and travel. For example, an advanced driver assistance system (advanced driver assistance system, ADAS) plays a very important role in an intelligent vehicle, and uses a detection apparatus mounted on the vehicle to detect an ambient environment, collect data, identify static or moving objects, and the like in a traveling process of the vehicle, and perform systematic calculation and analysis based on map data of a navigator, so that a driver can be aware of potential hazards in advance, effectively improving driving comfort and safety of the vehicle. The detection apparatus may be considered as an "eye" for sensing an environment, and includes a vision system sensor like a camera, and a radar system sensor like a millimeter-wave radar, a lidar, and an ultrasonic radar. The lidar (light detection and ranging, Lidar, or referred to as a light detection and ranging apparatus) has advantages of high resolution, good detection performance, and strong concealment, and is one of important detection apparatuses in the sensing field. A common architecture in a semi-solid-state lidar includes line laser emission (line emission or linear spot emission) at a transmit end (Tx), line scanning (line scanning) from a polygon (Polygon), and line light spot reception (line reception or linear spot reception) at a receive end (Rx). The transmit end and the receive end (TRx) are located on two opposite sides of the polygon. Currently, to achieve farthest distance measurement effect, the polygon is a regular polygon. An optical axis of a laser beam transmitted by Tx through the regular polygon is parallel to an optical axis of a receiving visual field of Rx. In this case, an initial overlapping region between a divergence region of the laser beam transmitted by Tx through the regular polygon and the receiving visual field is far away from the lidar, that is, a blind zone of a system is large. Therefore, coverage of the blind zone needs to be considered.

At present, a blind-zone coverage laser beam is added on a Tx side. A divergence region of the blind-zone coverage laser beam can overlap the receiving visual field earlier, reducing the blind zone. However, the addition of the blind-zone coverage laser beam requires an additional component, and the blind-zone coverage laser beam consumes some energy of the lidar, affecting manufacturing difficulty and ranging effect of the lidar.

## SUMMARY

This application provides a detection apparatus and a terminal, to reduce difficulty in manufacturing the detection apparatus and improve ranging effect.

A first aspect of this application provides a detection apparatus, including a transmitting module, a receiving module, and a scanning module, where the scanning module includes at least three reflective surfaces and at least two end surfaces, the at least three reflective surfaces are perpendicular to the at least two end surfaces, and at least two included angles between the at least three reflective surfaces are different; the transmitting module is configured to transmit a first laser beam, and the first laser beam is transmitted through a first reflective surface of the scanning module; and the receiving module is configured to receive the first laser beam returned through a second reflective surface of the scanning module.

In the foregoing aspect, the scanning module of the detection apparatus includes at least three reflective surfaces and at least two end surfaces. The at least three reflective surfaces are perpendicular to the at least two end surfaces respectively. The scanning module is a polygon with different angles, that is, at least two included angles between the at least three reflective surfaces are different. The transmitting module of the detection apparatus may transmit a first laser beam through a first reflective surface of the scanning module. The receiving module of the detection apparatus may receive the returned first laser beam through a second reflective surface of the scanning module. Because the scanning module has at least two different included angles, a divergence field of view of the first laser beam and a receiving field of view of the receiving module have different overlapping starting positions, and there are two or more different overlapping regions in one scanning cycle, expanding a scanning range without providing a blind-zone coverage laser beam, that is, without adding an additional component and without consuming ranging energy, thereby reducing difficulty in manufacturing the detection apparatus and improving ranging effect.

In a possible implementation of the first aspect, the at least two included angles include a first included angle and a second included angle, an included angle between the first reflective surface and the second reflective surface is the first included angle, and the first included angle is less than the second included angle.

In the foregoing possible implementation, the scanning module is a polygon. The polygon may rotate to adjust the included angle between the first reflective surface and the second reflective surface. The at least two different included angles may be the first included angle and the second included angle. When the first included angle is less than the second included angle, in a specific range, an overlapping position corresponding to the first included angle is farther from the scanning module than an overlapping position corresponding to a case in which the included angle between the first reflective surface and the second reflective surface is the second included angle. In this case, the detection apparatus can obtain a long detection distance when the first included angle is less than the second included angle.

In another possible implementation of the first aspect, an optical axis of the first laser beam is parallel to an optical axis of a receiving field of view of the receiving module.

In the foregoing possible implementation, when the included angle between the first reflective surface and the second reflective surface is the first included angle, and the first included angle makes the optical axis of the first laser beam parallel to the optical axis of the receiving field of view of the receiving module, the optical axis of the first laser beam does not intersect the optical axis of the receiving field of view, that is, the overlapping between the transmitting field of view and the receiving field of view does not end, and the detection apparatus can obtain the longest sensing distance.

In another possible implementation of the first aspect, the at least two included angles include a first included angle and a second included angle, an included angle between the first reflective surface and the second reflective surface is the first included angle, and the first included angle is greater than the second included angle.

In the foregoing possible implementation, because late ending of the overlapping corresponds to late starting of the overlapping, a blind zone between the overlapping region and the detection apparatus is larger. In a case that the at least two included angles include the first included angle and the second included angle, and the first included angle is greater than the second included angle, when the included angle between the first reflective surface and the second reflective surface is the first included angle, the overlapping can start earlier than the overlapping corresponding to the second included angle. In this case, the blind zone between the detection apparatus and the overlapping region can be reduced.

In another possible implementation of the first aspect, an optical axis of the first laser beam is not parallel to an optical axis of a receiving field of view of the receiving module.

In the foregoing possible implementation, when the included angle between the first reflective surface and the second reflective surface is the first included angle, the optical axis of the first laser beam and the optical axis of the receiving field of view need to be in a non-parallel state, to make the divergence field of view and the receiving field of view overlap earlier, ensuring effect of reducing a blind zone.

In another possible implementation of the first aspect, an overlapping region between a transmitting field of view of the transmitting module and the receiving field of view of the receiving module is a first overlapping region when the included angle between the first reflective surface and the second reflective surface is the first included angle, the overlapping region between the transmitting field of view of the transmitting module and the receiving field of view of the receiving module is a second overlapping region when the included angle between the first reflective surface and the second reflective surface is the second included angle, and a combined region of the first overlapping region and the second overlapping region is a target scanning region.

In the foregoing possible implementation, a blind-zone coverage region is given. The blind-zone coverage region is a region that originally cannot be scanned entirely or partially but is currently desired to be scanned. In this case, the target scanning region that can be sensed by the detection apparatus needs to include at least the entire blind-zone coverage region. Specifically, the transmitting field of view and the receiving field of view have different overlapping regions for different included angles. The overlapping region between the transmitting field of view and the receiving field of view is the first overlapping region when the included angle between the first reflective surface and the second reflective surface is the first included angle. The overlapping region between the transmitting field of view and the receiving field of view is the second overlapping region when the included angle between the first reflective surface and the second reflective surface is the second included angle. The combined region of the first overlapping region and the second overlapping region is the target scanning region. For a scanning module with only two different included angles, a first overlapping region and a second overlapping region at least partially overlap, to ensure scanning continuity.

In another possible implementation of the first aspect, a position and size of the overlapping region are correlated with at least one of an optical axis included angle and transceiving parameters, the transceiving parameters include an initial distance between the optical axis of the first laser beam and the optical axis of the receiving field of view, a width of the first laser beam, a divergence angle of the first laser beam, a receiving aperture of the receiving module, and the field of view of the receiving module, and the optical axis included angle is an included angle between the optical axis of the first laser beam and the optical axis of the receiving field of view.

In the foregoing possible implementation, the position and size of the overlapping region are determined based on at least one of the optical axis included angle and the transceiving parameters, so that a manner of calculating the overlapping region is provided, improving accuracy of the overlapping region.

In another possible implementation of the first aspect, the optical axis included angle is an included angle difference between the second included angle and the included angle between the first reflective surface and the second reflective surface.

In the foregoing possible implementation, the second included angle is fixed as a farthest distance measurement angle for the detection apparatus to achieve the farthest sensing effect, improving farthest distance measurement effect of the detection apparatus.

In another possible implementation of the first aspect, the first overlapping region is closer to the scanning module than the second overlapping region.

In the foregoing possible implementation, the first overlapping region is closer to the scanning module than the second overlapping region. In other words, when the scanning module rotates to the first included angle, a blind zone corresponding to the second included angle can be reduced.

In another possible implementation of the first aspect, the at least two included angles further include a third included angle, the third included angle is greater than the first included angle, and the optical axis of the first laser beam is not parallel to the optical axis of the receiving field of view of the receiving module when the included angle between the first reflective surface and the second reflective surface is the third included angle.

In the foregoing possible implementation, the third included angle can also make the optical axis of the first laser beam and the optical axis of the receiving field of view non-parallel when the included angle between the first reflective surface and the second reflective surface is the third included angle. In this case, the third included angle can also achieve blind-zone coverage effect compared with the second included angle corresponding to parallel optical axes.

In another possible implementation of the first aspect, the overlapping region between the transmitting field of view of the transmitting module and the receiving field of view of the receiving module is a third overlapping region when the included angle between the first reflective surface and the second reflective surface is the third included angle, and the third overlapping region is closer to the scanning module than the first overlapping region.

In the foregoing possible implementation, when the included angle between the first reflective surface and the second reflective surface turns to the third included angle, the overlapping region between the transmitting field of view and the receiving field of view may be referred to as the third overlapping region. The third overlapping region may be determined based on an initial overlapping distance and a final overlapping distance that correspond to the third included angle. The initial overlapping distance corresponding to the third included angle is less than an initial overlapping distance corresponding to the first included angle, and the final overlapping distance corresponding to the third included angle is less than a final overlapping distance corresponding to the first included angle. In this case, the third overlapping region can be closer to the scanning module than the first overlapping region, achieving better blind-zone coverage effect.

In another possible implementation of the first aspect, the at least two included angles further include a fourth included angle, the fourth included angle is greater than the third included angle, and the optical axis of the first laser beam is not parallel to the optical axis of the receiving field of view of the receiving module when the included angle between the first reflective surface and the second reflective surface is the fourth included angle.

In the foregoing possible implementation, the fourth included angle can also make the optical axis of the first laser beam and the optical axis of the receiving field of view non-parallel when the included angle between the first reflective surface and the second reflective surface is the fourth included angle. In this case, the fourth included angle can also achieve blind-zone coverage effect compared with the second included angle corresponding to parallel optical axes.

In another possible implementation of the first aspect, the overlapping region between the transmitting field of view of the transmitting module and the receiving field of view of the receiving module is a fourth overlapping region when the included angle between the first reflective surface and the second reflective surface is the fourth included angle, and the fourth overlapping region is closer to the scanning module than the third overlapping region.

In the foregoing possible implementation, when the included angle between the first reflective surface and the second reflective surface turns to the fourth included angle, the overlapping region between the transmitting field of view and the receiving field of view may be referred to as the fourth overlapping region. The fourth overlapping region may be determined based on an initial overlapping distance and a final overlapping distance that correspond to the fourth included angle. The initial overlapping distance corresponding to the fourth included angle is less than an initial overlapping distance corresponding to the third included angle, and the final overlapping distance corresponding to the fourth included angle is less than a final overlapping distance corresponding to the third included angle. In this case, the fourth overlapping region can be closer to the scanning module than the third overlapping region, so that blind-zone coverage effect can be enhanced.

In another possible implementation of the first aspect, the second included angle meets the following condition: a sum of the second included angle, the first included angle, and another included angle between the at least three reflective surfaces is a sum of interior angles of the end surface, and the second included angle is negatively correlated with an optical axis included angle corresponding to the first included angle.

In the foregoing possible implementation, angle setting of the first included angle and the second included angle needs to meet the following condition: the sum of the first included angle, the second included angle, and another included angle between the at least three reflective surfaces is the sum of interior angles of the end surface, and a larger optical axis included angle corresponding to the first included angle indicates a smaller second included angle, improving accuracy of setting the first included angle and the second included angle.

In another possible implementation of the first aspect, the second included angle meets the following condition: a sum of the second included angle, the first included angle, and another included angle between the at least three reflective surfaces is a sum of interior angles of the end surface, and the second included angle is negatively correlated with an optical axis included angle corresponding to the first included angle and an optical axis included angle corresponding to the third included angle.

In the foregoing possible implementation, angle setting of the first included angle, the second included angle, and the third included angle needs to meet the following condition: the sum of the first included angle, the second included angle, the third included angle, and another included angle between the at least three reflective surfaces is the sum of interior angles of the end surface, and a larger sum of the optical axis included angle corresponding to the first included angle and the optical axis included angle corresponding to the third included angle indicates a smaller second included angle, improving accuracy of setting the first included angle, the second included angle, and the third included angle.

In another possible implementation of the first aspect, the second included angle meets the following condition: a sum of the second included angle, the first included angle, and another included angle between the at least three reflective surfaces is a sum of interior angles of the end surface, and the second included angle is negatively correlated with an optical axis included angle corresponding to the first included angle, an optical axis included angle corresponding to the third included angle, and an optical axis included angle corresponding to the fourth included angle.

In the foregoing possible implementation, angle setting of the first included angle, the second included angle, the third included angle, and the fourth included angle needs to meet the following condition: the sum of the first included angle, the second included angle, the third included angle, the fourth included angle, and another included angle between the at least three reflective surfaces is the sum of interior angles of the end surface, and a larger sum of the optical axis included angle corresponding to the first included angle, the optical axis included angle corresponding to the third included angle, and the optical axis included angle corresponding to the fourth included angle indicates a smaller second included angle, improving accuracy of setting the first included angle, the second included angle, the third included angle, and the fourth included angle.

In another possible implementation of the first aspect, the scanning module is a reflective polygon or a refractive polygon.

According to a second aspect, an embodiment of this application further provides a terminal. The terminal includes the detection apparatus according to the first aspect or any implementation of the first aspect.

Optionally, the terminal may be an intelligent terminal or transportation means such as a vehicle, an unmanned aerial vehicle, or a robot.

For some beneficial effects of the second aspect of this application, refer to the beneficial effects of the first aspect. Details are not described herein again.

## BRIEF DESCRIPTION OF DRAWINGS

FIG. 1 is a diagram of a transmitting field of view and a receiving field of view of a detection apparatus according to an embodiment of this application;
FIG. 2 is a diagram of a transmitting field of view and a receiving field of view of another detection apparatus according to an embodiment of this application;
FIG. 3 is a diagram of a structure of a detection apparatus according to an embodiment of this application;
FIG. 4 is a diagram of overlapping according to an embodiment of this application;
FIG. 5 is a diagram of parameters according to an embodiment of this application;
FIG. 6 is a diagram of reflection of a four-surface polygon according to an embodiment of this application;
FIG. 7 is a diagram of reflection of a three-surface polygon according to an embodiment of this application;
FIG. 8 is a diagram of reflection of another three-surface polygon according to an embodiment of this application;
FIG. 9 is a diagram of reflection of another four-surface polygon according to an embodiment of this application;
FIG. 10 is a diagram of reflection of a five-surface polygon according to an embodiment of this application;
FIG. 11 is a diagram of reflection of another four-surface polygon according to an embodiment of this application;
FIG. 12 is a diagram of reflection of another five-surface polygon according to an embodiment of this application;
FIG. 13 is a diagram of reflection of a six-surface polygon according to an embodiment of this application;
FIG. 14 is a diagram of reflection of a seven-surface polygon according to an embodiment of this application; and
FIG. 15 is a diagram of a structure of a terminal according to an embodiment of this application.

## DESCRIPTION OF EMBODIMENTS

Embodiments of this application provide a detection apparatus and a terminal, to reduce difficulty in manufacturing the detection apparatus and improve ranging effect.

The following describes embodiments of this application with reference to the accompanying drawings. It is clear that the described embodiments are merely some rather than all of embodiments of this application. A person of ordinary skill in the art may learn that, with development of technologies and emergence of a new scenario, the technical solutions provided in embodiments of this application are also applicable to similar technical problems.

In the specification, claims, and accompanying drawings of this application, the terms "first", "second", and the like are intended to distinguish between similar objects but do not necessarily indicate a specific order or sequence. It should be understood that the data used in such a way are interchangeable in appropriate circumstances, so that the embodiments described herein can be implemented in an order other than the content illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

The following first describes related terms and concepts that may be used in embodiments of this application.

1. Detection apparatus

The detection apparatus mentioned in embodiments of this application may be a lidar, or may be another optical detection apparatus, for example, a fusion detection apparatus (for example, a detection apparatus that integrates a radar detector and an image sensor). A working principle of the detection apparatus is detecting a target in a visual field by transmitting a detection signal and receiving an echo.

In a possible use scenario, the detection apparatus in embodiments of this application can be used in various fields such as intelligent driving, intelligent transportation, intelligent manufacturing, environmental detection, surveying and mapping, and unmanned aerial vehicles, and can implement one or more functions of target detection, distance measurement, speed measurement, target tracking, and imaging recognition.

For a possible application position, the detection apparatus in embodiments of this application may be used in an on-board detection apparatus (for example, an on-board radar) and a roadside detection apparatus (for example, an intersection radar), and may also be used in another detection apparatus, for example, a detection apparatus mounted on an unmanned aerial vehicle, a robot, a rail vehicle, a bicycle, a traffic light, a speed measurement apparatus, a base station, or another apparatus. A mounting position of the detection apparatus is not limited in this application.

2. Field of view (field of view, FOV)

A line of sight (line of sight, LOS) region in which transmission of a signal (such as a radio wave or a laser) is not interrupted is required between a transmit end of a detection apparatus and a target object and/or between a receive end of the detection apparatus and the target object. The line of sight region may be understood as a visual field, also referred to as a field of view.

In some scenarios, an included angle whose vertex is a lens of an optical instrument and that is formed by two edges of a maximum range in which an object image of a measured target can pass through the lens is referred to as a field of view. The field of view determines a visual field of the optical instrument. A larger field of view indicates a larger visual field.

In embodiments of this application, a field of view in a vertical direction is an included angle formed by two edges of a maximum range that can be detected in the vertical direction.

The foregoing descriptions of the technical terms are optionally used in the following embodiments.

A detection principle of the detection apparatus is as follows: The transmit end transmits a detection signal to object space, so that a target in the object space can be illuminated by the detection signal. The receive end may receive an echo signal formed by reflecting the detection signal on the target, and measure related information of the target based on the echo signal.

Because power of a signal transmitted by the detection apparatus is usually limited, when a distant target needs to be detected, the transmitted detection signal has a high collimation degree and a small divergence angle. Consequently, the detection signal transmitted by the detection apparatus has a poor coverage capability for a close-range region, and there is a large near-field blind zone. Especially when the transmit end and the receive end are of an off-axis architecture, the near-field blind zone greatly reduces a close-range detection capability of the detection apparatus.

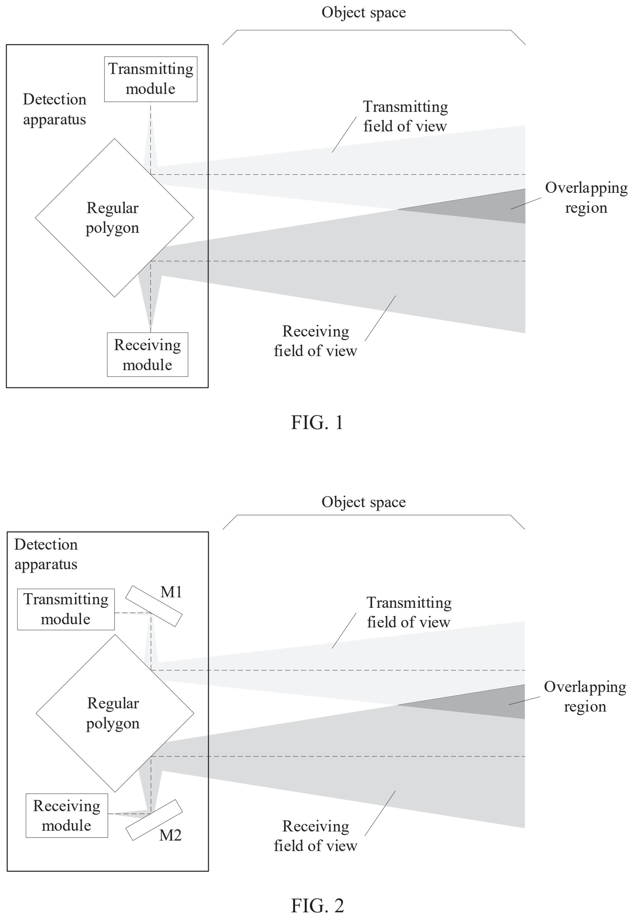

FIG. 1 is a diagram of a transmitting field of view and a receiving field of view of a detection apparatus. The detection apparatus includes a transmitting module, a receiving module, and a regular polygon. The transmitting module may transmit a detection signal through a reflective surface of the regular polygon. The receiving module may receive an echo signal of the detection signal through a reflective surface of the regular polygon. The transmitting field of view is object space covered by the detection signal transmitted by the transmitting module. The receiving field of view is object space in which the receiving module can receive a laser. Because the receiving module can receive the echo signal of the detection signal only in the object space covered by the detection signal, an overlapping region between the transmitting field of view and the receiving field of view is an effective detection range of the detection apparatus. It can be learned that, because the detection signal has a high collimation degree, an optical axis of the transmitting field of view is parallel to an optical axis of the receiving field of view, the transmitting field of view is narrow and long, and the overlapping region is correspondingly narrow and long, and is far away from the detection apparatus, resulting in a small effective detection range and a large blind zone. Only a very small detection range can be detected through one time of detection, resulting in low detection efficiency. A structure of the detection apparatus may alternatively be shown in FIG. 2. FIG. 2 is a diagram of a transmitting field of view and a receiving field of view of another detection apparatus. A detection signal from a transmitting module may be transmitted through a transmitting mirror M1 to a scanning module. An echo signal reflected by the scanning module may be reflected through a transmitting mirror M2 to a receiving module. This is not limited herein.

At present, a blind-zone coverage laser beam is added on a Tx side. A divergence region of the blind-zone coverage laser beam can earlier overlap the receiving visual field, reducing the blind zone. However, the addition of the blind-zone coverage laser beam requires an additional component, and the blind-zone coverage laser beam consumes some energy of the lidar, affecting manufacturing difficulty and ranging effect of the lidar.

To resolve the foregoing problem, embodiments of this application provide a detection apparatus. The apparatus is described as follows.

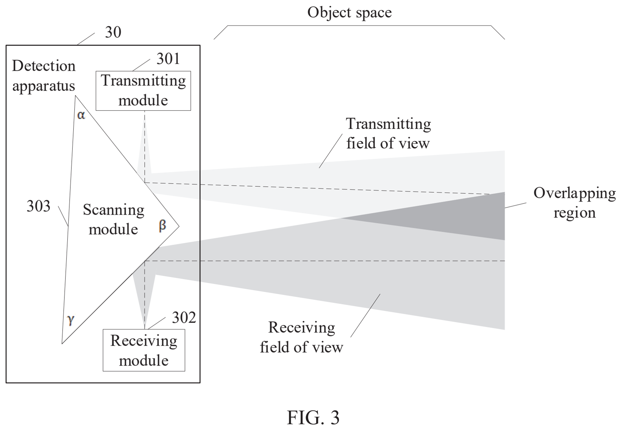

FIG. 3 is a diagram of a structure of a detection apparatus according to an embodiment of this application. The apparatus 30 includes a transmitting module 301, a receiving module 302, and a scanning module 303. The scanning module 303 includes at least three reflective surfaces and at least two end surfaces. The at least three reflective surfaces are perpendicular to the at least two end surfaces. At least two included angles between the at least three reflective surfaces are different. In FIG. 3, a side view of the scanning module 303 with only three reflective surfaces is used as an example (only one end surface is shown). For example, included angles between the three reflective surfaces include $\alpha$, $\beta$, and $\gamma$, where $\alpha$ and $\beta$ are different, and $\gamma$ may be any one of $\alpha$ and $\beta$, or may be different from $\alpha$ and $\beta$. The transmitting module 301 is configured to transmit a first laser beam. The first laser beam is transmitted through a first reflective surface of the scanning module 303. The first reflective surface is a collective term for a reflective surface currently used to reflect the first laser beam transmitted by the transmitting module 301. The receiving module 302 is configured to receive the first laser beam returned through a second reflective surface of the scanning module 303. The second reflective surface is a collective term for a reflective surface that currently reflects an echo of the first laser beam to the receiving module 302.

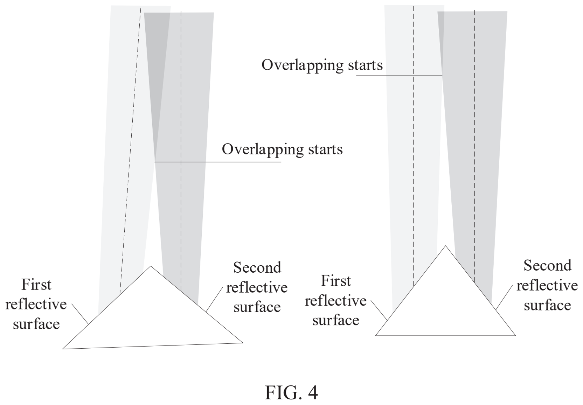

The overlapping region has different initial positions and ranges due to different included angles. Refer to a diagram of overlapping shown in FIG. 4. Assuming that a position of a second reflective surface remains unchanged, and an angle between a first reflective surface and the second reflective surface in the left panel of FIG. 4 is different from an angle between the first reflective surface and the second reflective surface in the right panel of FIG. 4, reflection of a first laser beam based on the first reflective surface in the left panel of FIG. 4 is at an inclination angle different from that in the right panel, resulting in different overlapping positions between the first laser beam and a receiving field of view. As shown in FIG. 4, there is a difference between initial overlapping positions in the two panels. The angle between the first reflective surface and the second reflective surface in the left panel of FIG. 4 is greater than the angle between the first reflective surface and the second reflective surface in the right panel of FIG. 4.

In a possible design, the scanning module 303 is a polygon. The polygon may rotate to adjust the included angle between the first reflective surface and the second reflective surface. The at least two different included angles may be the first included angle and the second included angle. When the first included angle is less than the second included angle, the scanning module 303 may rotate to make the first included angle as the included angle between the first reflective surface and the second reflective surface. As shown in the diagram of overlapping in FIG. 4, the overlapping in the right panel is later than that in the left panel. Correspondingly, in the diagram of overlapping, ending of the overlapping in the right panel is later than that in the left panel. In this case, when the included angle between the first reflective surface and the second reflective surface is the first included angle, the detection apparatus can sense a farther position.

When the included angle between the first reflective surface and the second reflective surface is the first included angle, and the first included angle makes the optical axis of the first laser beam parallel to the optical axis of the receiving field of view of the receiving module, with reference to the transmitting field of view and the receiving field of view shown in FIG. 1, the optical axis of the first laser beam does not intersect the optical axis of the receiving field of view, that is, the overlapping between the transmitting field of view and the receiving field of view does not end, and the detection apparatus can obtain the longest sensing distance.

In a possible design, because late ending of the overlapping corresponds to late starting of the overlapping, a blind zone between the overlapping region and the detection apparatus is larger. In a case that the at least two included angles include the first included angle and the second included angle, and the first included angle is greater than the second included angle, when the included angle between the first reflective surface and the second reflective surface is the first included angle, the overlapping can start earlier than the overlapping corresponding to the second included angle. In this case, the blind zone between the detection apparatus and the overlapping region can be reduced.

When the included angle between the first reflective surface and the second reflective surface is the first included angle, the optical axis of the first laser beam and the optical axis of the receiving field of view need to be in a non-parallel state, to make the divergence field of view and the receiving field of view overlap earlier, ensuring effect of reducing a blind zone.

In embodiments of this application, at least two different included angles are set for the scanning module to achieve blind-zone coverage effect. In other words, a blind-zone coverage region is given. The blind-zone coverage region is a region that originally cannot be scanned entirely or partially but is currently desired to be scanned. In this case, a target scanning region that can be sensed by the detection apparatus needs to include at least the entire blind-zone coverage region. Specifically, the transmitting field of view and the receiving field of view have different overlapping regions for different included angles. An overlapping region between the transmitting field of view and the receiving field of view is a first overlapping region when the included angle between the first reflective surface and the second reflective surface is the first included angle. The overlapping region between the transmitting field of view and the receiving field of view is a second overlapping region when the included angle between the first reflective surface and the second reflective surface is the second included angle. A combined region of the first overlapping region and the second overlapping region is a target scanning region. For a scanning module with only two different included angles, a first overlapping region and a second overlapping region at least partially overlap, to ensure scanning continuity.

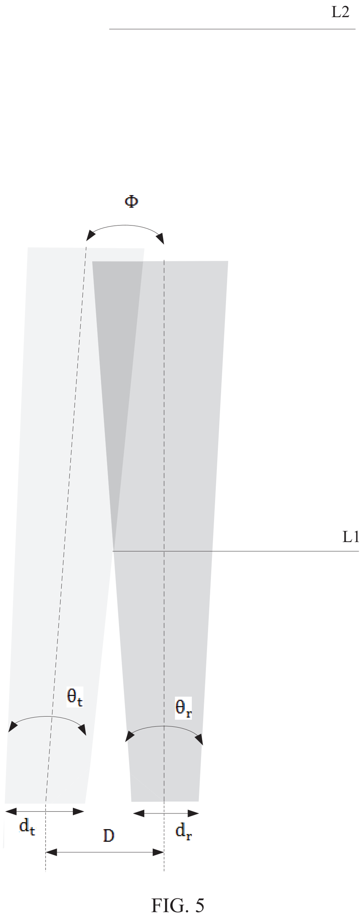

In a possible design, the overlapping region between the transmitting field of view and the receiving field of view may be determined based on an initial overlapping distance and a final overlapping distance. To be specific, the receiving field of view is divided based on the initial overlapping distance and the final overlapping distance to obtain a region as the overlapping region. Data of the initial overlapping distance and the final overlapping distance may be obtained through calculation. Determining the initial overlapping distance and the final overlapping distance is correlated with at least one of an optical axis included angle $\Phi$ and transceiving parameters. The transceiving parameters include an initial distance D between the optical axis of the first laser beam and the optical axis of the receiving field of view, a width $d_t$ of the first laser beam, a divergence angle $\theta_t$ of the first laser beam, a receiving aperture $d_r$ of the receiving module, and an angle $\theta_r$ of field of view of the receiving module. The optical axis included angle $\Phi$ is an included angle between the optical axis of the first laser beam and the optical axis of the receiving field of view. For details, refer to a diagram of parameters shown in FIG. 5. In FIG. 5, the initial overlapping distance is L1, the end overlapping distance is L2, and the transmitting field of view is a field of view of the first laser beam (due to space limitation of the figure, the intersection of the optical axis of the transmitting field of view and the optical axis of the receiving field of view is not shown in FIG. 5, and a middle part from the starting of overlapping to the ending of overlapping between the transmitting field of view and the receiving field of view is not shown in FIG. 5).

Correspondingly, the calculation of L1 and L2 may meet the following formulas:

$$L1 = \frac{D - \frac{d_t}{2} - \frac{d_r}{2}}{\frac{1}{\tan(90 - \Phi + \frac{\theta_t}{2})} + \frac{1}{\tan(90 - \frac{\theta_r}{2})}}$$

$$L2 = \frac{D + \frac{d_t}{2} + \frac{d_r}{2}}{\frac{1}{\tan(90 - \Phi + \frac{\theta_t}{2})} - \frac{1}{\tan(90 - \frac{\theta_r}{2})}}$$

For the change of the included angle between the first reflective surface and the second reflective surface, $\Phi$ affects the foregoing formulas the most. When the optical axis of the transmitting field of view is parallel to the optical axis of the receiving field of view, $\Phi$ is 0. An example in which the second included angle is an included angle that makes the optical axis of the transmitting field of view parallel to the optical axis of the receiving field of view is used. An included angle difference between the first included angle and a current included angle between the first reflective surface and the second reflective surface is $\Phi$. Assuming that the second included angle is $\alpha$ and the first included angle is $\beta$, $\Phi = \beta - \alpha$.

$\Phi$ is negatively correlated with L1 and L2, that is, larger $\Phi$ indicates smaller L1 and L2. In a case that the first included angle is greater than the second included angle, an initial overlapping distance and a final overlapping distance corresponding to a case in which the included angle between the first reflective surface and the second reflective surface is the first included angle are greater than an initial overlapping distance and a final overlapping distance corresponding to a case in which the included angle between the first reflective surface and the second reflective surface is the second included angle. In other words, the first overlapping region is closer to the scanning module than the second overlapping region.

For the detection apparatus to achieve both farthest distance measurement effect (farthest sensing effect) and blind-zone coverage effect (blind zone reduction), the second included angle may be fixed as a farthest distance measurement angle $\alpha$ for the detection apparatus to achieve the farthest sensing effect. When the scanning module rotates to the second included angle $\alpha$, the detection apparatus can have the farthest L1 and L2. When the scanning module rotates to the first included angle, a blind zone corresponding to the second included angle can be reduced. Calculation formulas of L1 and L2 corresponding to the first included angle and the second included angle may be shown in Table 1:

Table 1

| $\alpha$ | $\beta$ |
|---|---|
| $L_1^\alpha = \dfrac{D - \frac{d_t}{2} - \frac{d_r}{2}}{\frac{1}{\tan(90 - \Phi + \frac{\theta_t}{2})} + \frac{1}{\tan(90 - \frac{\theta_r}{2})}}$ | $L_1^\beta = \dfrac{D - \frac{d_t}{2} - \frac{d_r}{2}}{\frac{1}{\tan(90 - \beta + \alpha + \frac{\theta_t}{2})} + \frac{1}{\tan(90 - \frac{\theta_r}{2})}}$ |
| $L_2^\alpha = +\infty$ | $L_2^\beta = \dfrac{D + \frac{d_t}{2} + \frac{d_r}{2}}{\frac{1}{\tan(90 - \beta + \alpha + \frac{\theta_t}{2})} - \frac{1}{\tan(90 - \frac{\theta_r}{2})}}$ |

To ensure scanning continuity when achieving blind-zone coverage effect, $L_1^\beta$ and $L_2^\beta$ further need to be limited. Assuming that a required blind-zone coverage region is a region limited by D1 and D2, $L_1^\beta$ and $L_2^\beta$ need to meet:

$$L_1^\beta \le D_1, \ L_2^\beta \ge L_1^\alpha, \ L_2^\alpha \ge D_2$$

.

Values of $\alpha$ and $\beta$ further need to meet the following condition: a sum of $\alpha$, $\beta$, and another included angle between the at least three reflective surfaces is a sum of interior angles of the end surface. In a case that $\alpha$ is a farthest distance measurement angle, $\beta$ may be directly determined by $\Phi + \alpha$, and the second included angle $\alpha$ is negatively correlated with the optical axis included angle ct> corresponding to the first included angle $\beta$, that is, larger $\Phi$ indicates smaller $\alpha$.

For example, it is assumed that a number of surfaces of the scanning module (polygon (Polygon)) is N (N $\ge$ 3).

(1) When N is an even number, included angles between the surfaces are set to $\alpha\beta\alpha\beta...$, and specific degrees of the included angles between the surfaces need to meet:

$$\begin{cases} \dfrac{N(\alpha + \beta)}{2} = 180°(N - 2) \\ \beta - \alpha = \Phi \end{cases}$$

The foregoing formulas may be combined into $\dfrac{N(2\alpha + \Phi)}{2} = 180°(N - 2)$ , where $\Phi$ may be selected from optical axis included angles that meet $L_1^\beta \le D_1$, $L_2^\beta \ge L_1^\alpha$ , and $L_2^\alpha \ge D_2$ . In this case, for a known number N of surfaces, a value of the farthest distance measurement angle $\alpha$ can be determined, and a corresponding value of $\beta$ can also be known.

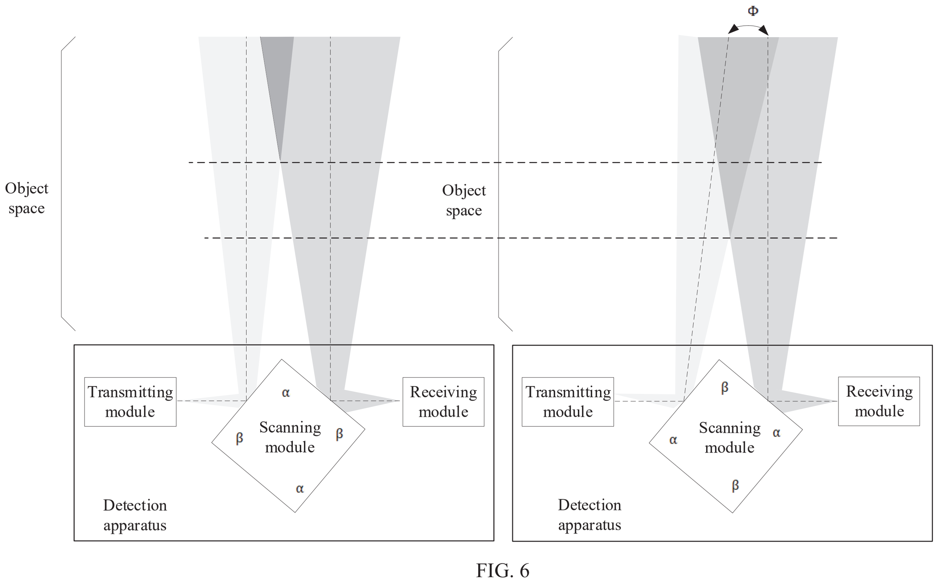

For example, the even number N is 4. FIG. 6 is a diagram of reflection of a four-surface polygon according to an embodiment of this application. In this case, the scanning module includes four reflective surfaces, and angles between the four reflective surfaces are $\alpha$, $\beta$, $\alpha$, and $\beta$. When the scanning module rotates to $\alpha$, the optical axis of the transmitting field of view is parallel to the optical axis of the receiving field of view, as shown in the left panel of FIG. 6. When the scanning module rotates to $\beta$, the optical axis of the transmitting field of view is not parallel to the optical axis of the receiving field of view, as shown in the right panel of FIG. 6. In this case, there is an optical axis included angle $\Phi$, and $\Phi = \beta - \alpha$.

(2) When N is an odd number, there is an additional angle, and the additional angle $\gamma$ may be set to $\alpha$, $\beta$, or another proper value c, that is,

$$\begin{cases} \dfrac{(N - 1)(\alpha + \beta)}{2} + \gamma = 180°(N - 2) \\ \beta - \alpha = \Phi \\ \gamma = \alpha \ \text{or} \ \beta \ \text{or} \ c \end{cases}$$

Similarly, the formulas are combined into $\frac{(N-1)(2\alpha+\Phi)}{2} + \gamma = 180°(N-2)$. After a value of $\Phi$ is selected, a value of the farthest distance measurement angle $\alpha$ can be determined based on a known number N of surfaces and a selected value of $\gamma$, and a corresponding value of $\beta$ can also be known.

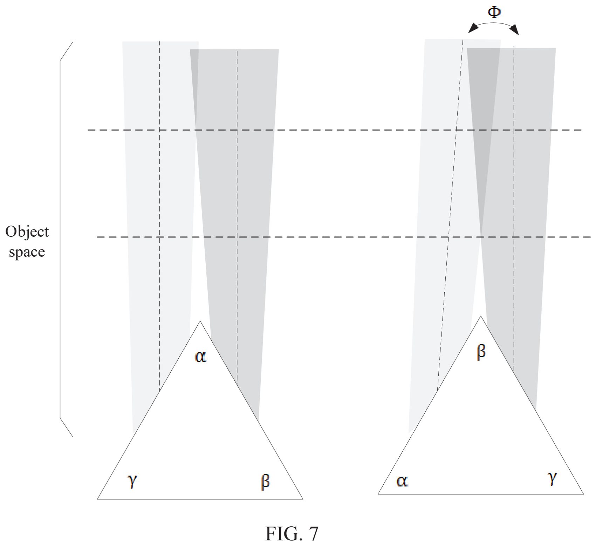

For example, the odd number N is 3. FIG. 7 is a diagram of reflection of a three-surface polygon according to an embodiment of this application. In this case, the scanning module includes three reflective surfaces, and angles between the three reflective surfaces are $\alpha$, $\beta$, and $\gamma$. When the scanning module rotates to $\alpha$, the optical axis of the transmitting field of view is parallel to the optical axis of the receiving field of view, as shown in the left panel of FIG. 7. When the scanning module rotates to $\beta$, the optical axis of the transmitting field of view is not parallel to the optical axis of the receiving field of view, as shown in the right panel of FIG. 7. In this case, there is an optical axis included angle $\Phi$, and $\Phi = \beta - \alpha$.

In a possible design, the at least two different included angles may further include a third included angle. The third included angle is different from the first included angle and the second included angle, and the third included angle is greater than the first included angle. The third included angle can also make the optical axis of the first laser beam and the optical axis of the receiving field of view non-parallel when the included angle between the first reflective surface and the second reflective surface is the third included angle. In this case, the third included angle can also achieve blind-zone coverage effect compared with the second included angle corresponding to parallel optical axes.

Because the third included angle is greater than the first included angle, the optical axis of the transmitting field of view has a larger inclination angle. When the included angle between the first reflective surface and the second reflective surface turns to the third included angle, the overlapping region between the transmitting field of view and the receiving field of view may be referred to as the third overlapping region. The third overlapping region may be determined based on an initial overlapping distance and a final overlapping distance that correspond to the third included angle. The initial overlapping distance corresponding to the third included angle is less than an initial overlapping distance corresponding to the first included angle, and the final overlapping distance corresponding to the third included angle is less than a final overlapping distance corresponding to the first included angle. In this case, the third overlapping region can be closer to the scanning module than the first overlapping region, achieving better blind-zone coverage effect.

For the detection apparatus to achieve both farthest distance measurement effect and blind-zone coverage effect, the second included angle may be fixed as a farthest distance measurement angle $\alpha$ for the detection apparatus to achieve farthest sensing effect. When the scanning module rotates to the second included angle $\alpha$, the detection apparatus can have the farthest L1 and L2. When the scanning module rotates to the first included angle, a blind zone corresponding to the second included angle can be reduced. When the scanning module rotates to the third included angle, a blind zone corresponding to the first included angle can be further reduced. Calculation formulas of L1 and L2 corresponding to the first included angle $\beta_1$, the second included angle $\alpha$, and the third included angle $\beta_2$ may be shown in Table 2:

Table 2

| $\alpha$ | $\beta_1$ | $\beta_2$ |
|---|---|---|
| $L_1^{\alpha} = \dfrac{D - \frac{d_t}{2} - \frac{d_r}{2}}{\frac{1}{\tan(90-\Phi+\frac{\theta_t}{2})} + \frac{1}{\tan(90-\frac{\theta_r}{2})}}$ | $L_1^{\beta_1} = \dfrac{D - \frac{d_t}{2} - \frac{d_r}{2}}{\frac{1}{\tan(90-\beta_1+\alpha+\frac{\theta_t}{2})} + \frac{1}{\tan(90-\frac{\theta_r}{2})}}$ | $L_1^{\beta_2} = \dfrac{D - \frac{d_t}{2} - \frac{d_r}{2}}{\frac{1}{\tan(90-\beta_2+\alpha+\frac{\theta_t}{2})} + \frac{1}{\tan(90-\frac{\theta_r}{2})}}$ |
| $L_2^{\alpha} = +\infty$ | $L_2^{\beta_1} = \dfrac{D + \frac{d_t}{2} + \frac{d_r}{2}}{\frac{1}{\tan(90-\beta_1+\alpha+\frac{\theta_t}{2})} - \frac{1}{\tan(90-\frac{\theta_r}{2})}}$ | $L_2^{\beta_2} = \dfrac{D + \frac{d_t}{2} + \frac{d_r}{2}}{\frac{1}{\tan(90-\beta_2+\alpha+\frac{\theta_t}{2})} - \frac{1}{\tan(90-\frac{\theta_r}{2})}}$ |

To ensure scanning continuity when achieving blind-zone coverage effect, $L_1^{\beta_1}$, $L_2^{\beta_1}$, $L_1^{\beta_2}$, and $L_2^{\beta_2}$ further need to be limited. Assuming that a required blind-zone coverage region is a region limited by D1 and D2, two angle differences of blind-zone coverage relative to farthest distance measurement are $\Phi_1 = \alpha - \beta_1$ and $\Phi_2 = \alpha - \beta_2$, and corresponding ranging ranges are $[L_1^{\beta_1}, L_2^{\beta_1}]$ and $[L_1^{\beta_2}, L_2^{\beta_2}]$ respectively, $L_1^{\beta_1}$, $L_2^{\beta_1}$, $L_1^{\beta_2}$, and $L_2^{\beta_2}$ need to meet:

$$L_1^{\beta_2} \leq D_1, \ L_2^{\beta_2} \leq L_1^{\beta_1}, \ L_2^{\beta_1} \geq L_1^{\alpha}, \ L_2^{\alpha} \geq D_2.$$

Values of $\alpha$, $\beta_1$, and $\beta_2$ further need to meet the following condition: a sum of $\alpha$, $\beta_1$, $\beta_2$, and another included angle between the at least three reflective surfaces is a sum of interior angles of the end surface. In a case that $\alpha$ is a farthest

distance measurement angle, $\beta_1$ may be directly determined by $\Phi_1 + \alpha$, $\beta_2$ may be directly determined by $\Phi_2 + \alpha$, and the second included angle $\alpha$ is negatively correlated with the optical axis included angle $\Phi_1$ corresponding to the first included angle $\beta_1$ and the optical axis included angle $\Phi_2$ corresponding to the third included angle $\beta_2$, that is, a larger sum of $\Phi_1$ and $\Phi_2$ indicates smaller $\alpha$.

For example, it is assumed that a number of surfaces of the scanning module (polygon (Polygon)) is N ($N \geq 3$).

(1) When N is a multiple of 3, included angles between the surfaces are set to $\alpha\beta_1\beta_2\alpha\beta_1\beta_2$ ..., and specific degrees of the included angles between the surfaces need to meet:

$$\begin{cases} \dfrac{N(\alpha + \beta_1 + \beta_2)}{3} = 180°(N-2) \\ \beta_1 - \alpha = \Phi_1 \\ \beta_2 - \alpha = \Phi_2 \end{cases}$$

The foregoing formulas may be combined into $\dfrac{N(3\alpha + \Phi_1 + \Phi_2)}{3} = 180°(N-2)$, where $\Phi_1$ and $\Phi_2$ may be selected from optical axis included angles that meet $L_1^{\beta_2} \leq D_1$, $L_2^{\beta_2} \leq L_1^{\beta_1}$, $L_2^{\beta_1} \geq L_1^{\alpha}$, and $L_2^{\alpha} \geq D_2$. In this case, for a known number N of surfaces, a value of the farthest distance measurement angle $\alpha$ can be determined, and corresponding values of $\beta_1$ and $\beta_2$ can also be known.

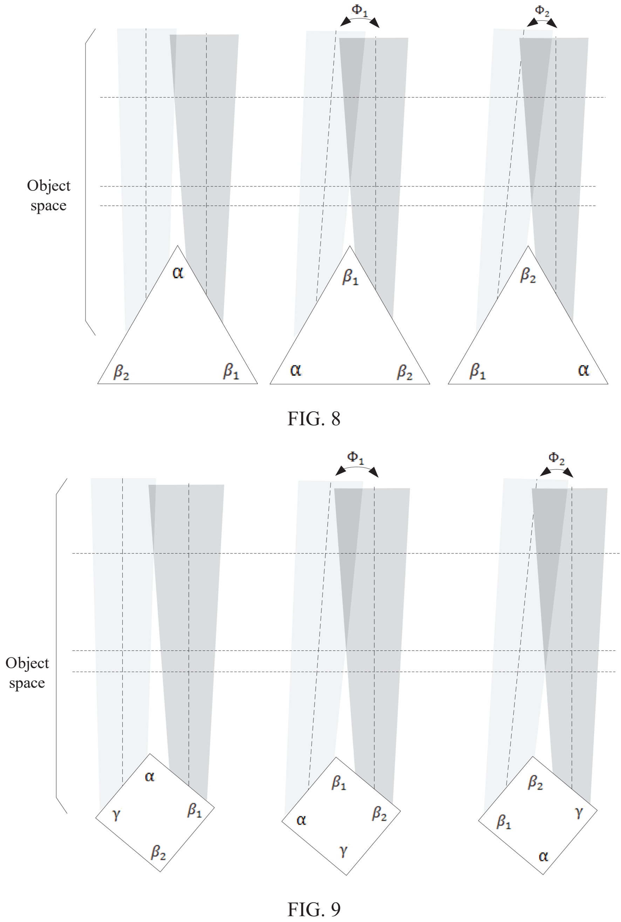

For example, the multiple N of 3 is 3. FIG. 8 is a diagram of reflection of another three-surface polygon according to an embodiment of this application. In this case, the scanning module includes three reflective surfaces, and angles between the three reflective surfaces are $\alpha$, $\beta_1$, and $\beta_2$. When the scanning module rotates to $\alpha$, the optical axis of the transmitting field of view is parallel to the optical axis of the receiving field of view, as shown in the left panel of FIG. 8. When the scanning module rotates to $\beta_1$, the optical axis of the transmitting field of view is not parallel to the optical axis of the receiving field of view, as shown in the middle panel of FIG. 8. In this case, there is an optical axis included angle $\Phi_1$, and $\Phi_1 = \beta_1 - \alpha$. When the scanning module rotates to $\beta_2$, the optical axis of the transmitting field of view is not parallel to the optical axis of the receiving field of view, and $L_2^{\beta_2} \leq L_1^{\beta_1}$, as shown in the right panel of FIG. 8. In this case, there is an optical axis included angle $\Phi_2$, and $\Phi_2 = \beta_2 - \alpha$.

(2) When $\dfrac{N}{3}$ has the remainder 1, there is an additional angle, and the additional angle $\gamma$ may be set to $\alpha$, $\beta_1$, $\beta_2$, or another proper value c, that is,

$$\begin{cases} \dfrac{(N-1)(\alpha + \beta_1 + \beta_2)}{3} + \gamma = 180°(N-2) \\ \beta_1 - \alpha = \Phi_1 \\ \beta_2 - \alpha = \Phi_2 \\ \gamma = \alpha \ or \ \beta_1 \ or \ \beta_2 \ or \ c \end{cases}$$

Similarly, the formulas are combined into $\dfrac{(N-1)(3\alpha + \Phi_1 + \Phi_2)}{3} + \gamma = 180°(N-2)$. After values of $\Phi_1$ and $\Phi_2$ are selected, a value of the farthest distance measurement angle $\alpha$ can be determined based on a known number N of surfaces and a selected value of $\gamma$, and corresponding values of $\beta_1$ and $\beta_2$ can also be known.

For example, N for $\dfrac{N}{3}$ with the remainder 1 is 4. FIG. 9 is a diagram of reflection of another four-surface polygon according to an embodiment of this application. In this case, the scanning module includes four reflective surfaces, and angles between the four reflective surfaces are $\alpha$, $\beta_1$, $\beta_2$, and $\gamma$. When the scanning module rotates to $\alpha$, the optical axis of the transmitting field of view is parallel to the optical axis of the receiving field of view, as shown in the first panel of FIG. 9. When the scanning module rotates to $\beta_1$, the optical axis of the transmitting field of view is not parallel to the optical axis of the receiving field of view, as shown in the second panel of FIG. 9. In this case, there is an optical axis included angle $\Phi_1$, and $\Phi_1 = \beta_1 - \alpha$. When the scanning module rotates to $\beta_2$, the optical axis of the transmitting field of view is not parallel to the optical axis of the receiving field of view, and $L_2^{\beta_2} \leq L_1^{\beta_1}$, as shown in the third panel of FIG. 9. In this case, there is an optical axis included angle $\Phi_2$, and $\Phi_2 = \beta_2 - \alpha$.

(3) When $\frac{N}{3}$ has the remainder 2, there are two additional angles, and the additional angles $\gamma_1$ and $\gamma_2$ may be set to $\alpha$, $\beta_1$, $\beta_2$, or another proper value c, that is,

$$\begin{cases} \dfrac{(N-2)(\alpha + \beta_1 + \beta_2)}{3} + \gamma_1 + \gamma_2 = 180°(N-2) \\ \beta_1 - \alpha = \Phi_1 \\ \beta_2 - \alpha = \Phi_2 \\ \gamma_1 = \alpha \text{ or } \beta_1 \text{ or } \beta_2 \text{ or c} \\ \gamma_2 = \alpha \text{ or } \beta_1 \text{ or } \beta_2 \text{ or c} \end{cases}$$

Similarly, the formulas are combined into $\frac{(N-1)(3\alpha + \Phi_1 + \Phi_2)}{3} + \gamma_1 + \gamma_2 = 180°(N-2)$. After values of $\Phi_1$ and $\Phi_2$ are selected, a value of the farthest distance measurement angle $\alpha$ can be determined based on a known number N of surfaces and selected values of $\gamma_1$ and $\gamma_2$, and corresponding values of $\beta_1$ and $\beta_2$ can also be known.

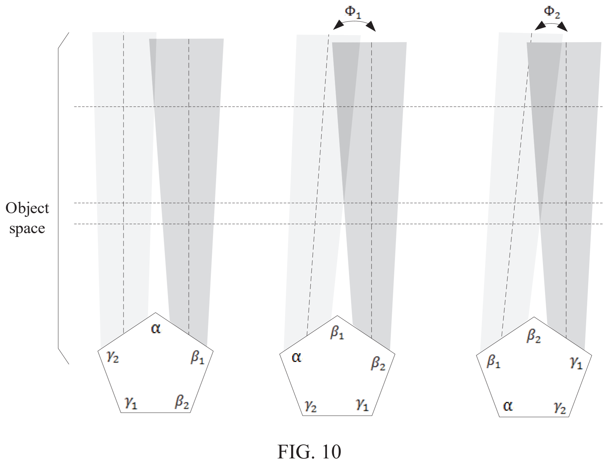

For example, N for $\frac{N}{3}$ with the remainder 2 is 5. FIG. 10 is a diagram of reflection of a five-surface polygon according to an embodiment of this application. In this case, the scanning module includes five reflective surfaces, and angles between the five reflective surfaces are $\alpha$, $\beta_1$, $\beta_2$, $\gamma_1$, and $\gamma_2$. When the scanning module rotates to $\alpha$, the optical axis of the transmitting field of view is parallel to the optical axis of the receiving field of view, as shown in the first panel of FIG. 9. When the scanning module rotates to $\beta_1$, the optical axis of the transmitting field of view is not parallel to the optical axis of the receiving field of view, as shown in the second panel of FIG. 9. In this case, there is an optical axis included angle $\Phi_1$, and $\Phi_1 = \beta_1 - \alpha$. When the scanning module rotates to $\beta_2$, the optical axis of the transmitting field of view is not parallel to the optical axis of the receiving field of view, and $L_2^{\beta_2} \leq L_1^{\beta_1}$, as shown in the right panel of FIG. 8. In this case, there is an optical axis included angle $\Phi_2$, and $\Phi_2 = \beta_2 - \alpha$.

In a possible design, the at least two different included angles further include a fourth included angle based on the third included angle. The fourth included angle is different from the first included angle, the second included angle, and the third included angle, and the fourth included angle is greater than the third included angle. The fourth included angle can also make the optical axis of the first laser beam and the optical axis of the receiving field of view non-parallel when the included angle between the first reflective surface and the second reflective surface is the fourth included angle. In this case, the fourth included angle can also achieve blind-zone coverage effect compared with the second included angle corresponding to parallel optical axes.

Because the fourth included angle is greater than the third included angle, the optical axis of the transmitting field of view has a larger inclination angle. When the included angle between the first reflective surface and the second reflective surface turns to the fourth included angle, the overlapping region between the transmitting field of view and the receiving field of view may be referred to as the fourth overlapping region. The fourth overlapping region may be determined based on an initial overlapping distance and a final overlapping distance that correspond to the fourth included angle. The initial overlapping distance corresponding to the fourth included angle is less than an initial overlapping distance corresponding to the third included angle, and the final overlapping distance corresponding to the fourth included angle is less than a final overlapping distance corresponding to the third included angle. In this case, the fourth overlapping region can be closer to the scanning module than the third overlapping region, so that blind-zone coverage effect can be enhanced.

For the detection apparatus to achieve both farthest distance measurement effect and blind-zone coverage effect, the second included angle may be fixed as a farthest distance measurement angle $\alpha$ for the detection apparatus to achieve farthest sensing effect. When the scanning module rotates to the second included angle $\alpha$, the detection apparatus can have the farthest L1 and L2. When the scanning module rotates to the first included angle, a blind zone corresponding to the second included angle can be reduced. When the scanning module rotates to the third included angle, a blind zone corresponding to the first included angle can be further reduced. When the scanning module rotates to the fourth included angle, a blind zone corresponding to the third included angle can be further reduced. Calculation formulas of L1 and L2 corresponding to the first included angle $\beta_1$, the second included angle $\alpha$, the third included angle $\beta_2$, and the fourth included angle $\beta_3$ may be shown in Table 3:

EP 4 682 587 A1

| $\alpha$ | $\beta_1$ | $\beta_2$ | $\beta_3$ |
|---|---|---|---|
| $L_1^{\alpha} =$ $\dfrac{D-\frac{d_t}{2}-\frac{d_r}{2}}{\frac{1}{\tan(90-\Phi+\frac{\theta_t}{2})}+\frac{1}{\tan(90-\frac{\theta_r}{2})}}$ | $L_1^{\beta_1} =$ $\dfrac{D-\frac{d_t}{2}-\frac{d_r}{2}}{\frac{1}{\tan(90-\beta_1+\alpha+\frac{\theta_t}{2})}+\frac{1}{\tan(90-\frac{\theta_r}{2})}}$ | $L_1^{\beta_2} =$ $\dfrac{D-\frac{d_t}{2}-\frac{d_r}{2}}{\frac{1}{\tan(90-\beta_2+\alpha+\frac{\theta_t}{2})}+\frac{1}{\tan(90-\frac{\theta_r}{2})}}$ | $L_1^{\beta_3} =$ $\dfrac{D-\frac{d_t}{2}-\frac{d_r}{2}}{\frac{1}{\tan(90-\beta_3+\alpha+\frac{\theta_t}{2})}+\frac{1}{\tan(90-\frac{\theta_r}{2})}}$ |
| $L_2^{\alpha} = +\infty$ | $L_2^{\beta_1} =$ $\dfrac{D+\frac{d_t}{2}+\frac{d_r}{2}}{\frac{1}{\tan(90-\beta_1+\alpha+\frac{\theta_t}{2})}-\frac{1}{\tan(90-\frac{\theta_r}{2})}}$ | $L_2^{\beta_2} =$ $\dfrac{D+\frac{d_t}{2}+\frac{d_r}{2}}{\frac{1}{\tan(90-\beta_2+\alpha+\frac{\theta_t}{2})}-\frac{1}{\tan(90-\frac{\theta_r}{2})}}$ | $L_2^{\beta_3} =$ $\dfrac{D+\frac{d_t}{2}+\frac{d_r}{2}}{\frac{1}{\tan(90-\beta_3+\alpha+\frac{\theta_t}{2})}-\frac{1}{\tan(90-\frac{\theta_r}{2})}}$ |

To ensure scanning continuity when achieving blind-zone coverage effect, $L_1^{\beta_1}$, $L_2^{\beta_1}$, $L_1^{\beta_2}$, $L_2^{\beta_2}$, $L_1^{\beta_3}$, and $L_2^{\beta_3}$ further need to be limited. Assuming that a required blind-zone coverage region is a region limited by D1 and D2, three angle differences of blind-zone coverage relative to farthest distance measurement are $\Phi_1 = \alpha - \beta_1$, $\Phi_2 = \alpha - \beta_2$, and $\Phi_3 = \alpha - \beta_3$, and corresponding ranging ranges are $[L_1^{\beta_1}, L_2^{\beta_1}]$, $[L_1^{\beta_2}, L_2^{\beta_2}]$, and $[L_1^{\beta_3}, L_2^{\beta_3}]$ respectively, $L_1^{\beta_1}$, $L_2^{\beta_1}$, $L_1^{\beta_2}$, $L_2^{\beta_2}$, $L_1^{\beta_3}$, and $L_2^{\beta_3}$ need to meet:

$$L_1^{\beta_3} \leq D_1, \ L_2^{\beta_3} \leq L_1^{\beta_2}, \ L_2^{\beta_2} \leq L_1^{\beta_1}, \ L_2^{\beta_3} \geq L_1^{\alpha}, \ L_2^{\alpha} \geq D_2.$$

Values of $\alpha$, $\beta_1$, $\beta_2$, and $\beta_3$ further need to meet the following condition: a sum of $\alpha$, $\beta_1$, $\beta_2$, $\beta_3$, and another included angle between the at least three reflective surfaces is a sum of interior angles of the end surface. In a case that $\alpha$ is a farthest distance measurement angle, $\beta_1$ may be directly determined by $\Phi_1 + \alpha$, $\beta_2$ may be directly determined by $\Phi_2 + \alpha$, $\beta_3$ may be directly determined by $\Phi_3 + \alpha$, and the second included angle $\alpha$ is negatively correlated with the optical axis included angle $\Phi_1$ corresponding to the first included angle $\beta_1$, the optical axis included angle $\Phi_2$ corresponding to the third included angle $\beta_2$, and the optical axis included angle $\Phi_3$ corresponding to the fourth included angle $\beta_3$, that is, a larger sum of $\Phi_1$, $\Phi_2$, and $\Phi_3$ indicates smaller $\alpha$.

For example, it is assumed that a number of surfaces of the scanning module (polygon (Polygon)) is N (N $\geq$ 4).

(1) When N is a multiple of 4, included angles between the surfaces are set to $\alpha\beta_1\beta_2\beta_3\alpha\beta_1\beta_2\beta_3$ ..., and specific degrees of the included angles between the surfaces need to meet:

$$\begin{cases} \dfrac{N(\alpha + \beta_1 + \beta_2 + \beta_3)}{4} = 180°(N-2) \\ \beta_1 - \alpha = \Phi_1 \\ \beta_2 - \alpha = \Phi_2 \\ \beta_3 - \alpha = \Phi_3 \end{cases}$$

The foregoing formulas may be combined into $\dfrac{N(4\alpha + \Phi_1 + \Phi_2 + \Phi_3)}{4} = 180°(N-2)$, where $\Phi_1$, $\Phi_2$, and $\Phi_3$ may be selected from optical axis included angles that meet $L_1^{\beta_3} \leq D_1$, $L_2^{\beta_3} \leq L_1^{\beta_2}$, $L_2^{\beta_2} \leq L_1^{\beta_1}$, $L_2^{\beta_3} \geq L_1^{\alpha}$, and $L_2^{\alpha} \geq D_2$. In this case, for a known number N of surfaces, a value of the farthest distance measurement angle $\alpha$ can be determined, and corresponding values of $\beta_1$, $\beta_2$, and $\beta_3$ can also be known.

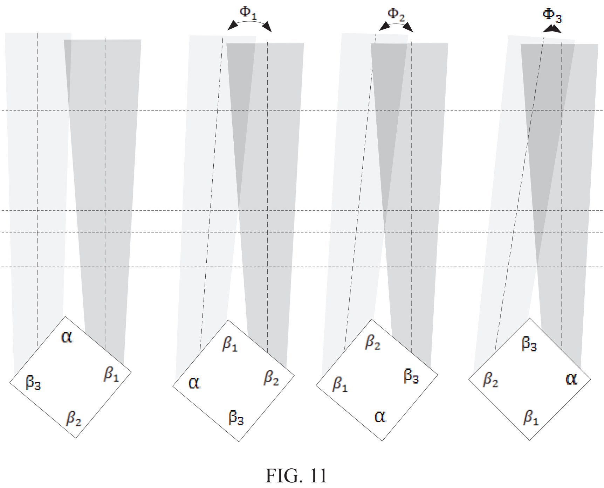

For example, the multiple N of 4 is 4. FIG. 11 is a diagram of reflection of another four-surface polygon according to an embodiment of this application. In this case, the scanning module includes four reflective surfaces, and angles between the four reflective surfaces are $\alpha$, $\beta_1$, $\beta_2$, and $\beta_3$. When the scanning module rotates to $\alpha$, the optical axis of the transmitting field of view is parallel to the optical axis of the receiving field of view, as shown in the first panel of FIG. 11. When the scanning module rotates to $\beta_1$, the optical axis of the transmitting field of view is not parallel to the optical axis of the receiving field of view, as shown in the second panel of FIG. 11. In this case, there is an optical axis included angle $\Phi_1$, and $\Phi_1 = \beta_1 - \alpha$. When the scanning module rotates to $\beta_2$, the optical axis of the transmitting field of view is not parallel to the optical axis of the receiving field of view, and $L_2^{\beta_2} \leq L_1^{\beta_1}$, as shown in the third panel of FIG. 11. In this case, there is an optical axis included angle $\Phi_2$, and $\Phi_2 = \beta_2 - \alpha$. When the scanning module rotates to $\beta_3$, the optical axis of the transmitting field of view is not parallel to the optical axis of the receiving field of view, and $L_2^{\beta_3} \leq L_1^{\beta_2}$, as shown in the fourth panel of FIG. 11. In this case, there is an optical axis included angle $\Phi_3$, and $\Phi_3 = \beta_3 - \alpha$.

(2) When $\dfrac{N}{4}$ has the remainder 1, there is an additional angle, and the additional angle $\gamma$ may be set to $\alpha$, $\beta_1$, $\beta_2$, $\beta_3$, or another proper value c, that is,

$$\begin{cases} \dfrac{(N-1)(\alpha + \beta_1 + \beta_2 + \beta_3)}{4} + \gamma = 180°(N-2) \\ \beta_1 - \alpha = \Phi_1 \\ \beta_2 - \alpha = \Phi_2 \\ \beta_3 - \alpha = \Phi_3 \\ \gamma = \alpha \ or \ \beta_1 \ or \ \beta_2 \ or \ \beta_3 \ or \ c \end{cases}$$

Similarly, the formulas are combined into $\dfrac{(N-1)(4\alpha + \Phi_1 + \Phi_2 + \Phi_3)}{4} + \gamma = 180°(N-2)$ . After values of $\Phi_1$, $\Phi_2$, and $\Phi_3$ are selected, a value of the farthest distance measurement angle $\alpha$ can be determined based on a known number N of surfaces and a selected value of $\gamma$, and corresponding values of $\beta_1$, $\beta_2$, and $\beta_3$ can also be known.

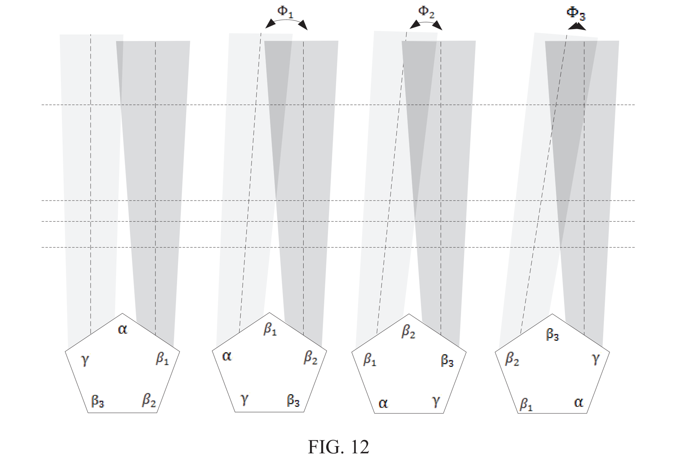

For example, N for $\dfrac{N}{4}$ with the remainder 1 is 5. FIG. 12 is a diagram of reflection of another five-surface polygon according to an embodiment of this application. In this case, the scanning module includes five reflective surfaces, and angles between the five reflective surfaces are $\alpha$, $\beta_1$, $\beta_2$, $\beta_3$, and $\gamma$. When the scanning module rotates to $\alpha$, the optical axis of the transmitting field of view is parallel to the optical axis of the receiving field of view, as shown in the first panel of FIG. 12. When the scanning module rotates to $\beta_1$, the optical axis of the transmitting field of view is not parallel to the optical axis of the receiving field of view, as shown in the second panel of FIG. 12. In this case, there is an optical axis included angle $\Phi_1$, and $\Phi_1 = \beta_1 - \alpha$. When the scanning module rotates to $\beta_2$, the optical axis of the transmitting field of view is not parallel to the optical axis of the receiving field of view, and $L_2^{\beta_2} \leq L_1^{\beta_1}$ , as shown in the third panel of FIG. 12. In this case, there is an optical axis included angle $\Phi_2$, and $\Phi_2 = \beta_2 - \alpha$. When the scanning module rotates to $\beta_3$, the optical axis of the transmitting field of view is not parallel to the optical axis of the receiving field of view, and $L_2^{\beta_3} \leq L_1^{\beta_2}$ , as shown in the fourth panel of FIG. 12. In this case, there is an optical axis included angle $\Phi_3$, and $\Phi_3 = \beta_3 - \alpha$.

(3) When $\dfrac{N}{4}$ has the remainder 2, there are two additional angles, and the additional angles $\gamma_1$ and $\gamma_2$ may be set to $\alpha$, $\beta_1$, $\beta_2$, $\beta_3$, or another proper value c, that is,

$$\begin{cases} \dfrac{(N-2)(\alpha + \beta_1 + \beta_2 + \beta_3)}{4} + \gamma_1 + \gamma_2 = 180°(N-2) \\ \beta_1 - \alpha = \Phi_1 \\ \beta_2 - \alpha = \Phi_2 \\ \beta_3 - \alpha = \Phi_3 \\ \gamma_1 = \alpha \ or \ \beta_1 \ or \ \beta_2 \ or \ \beta_3 \ or \ c \\ \gamma_2 = \alpha \ or \ \beta_1 \ or \ \beta_2 \ or \ \beta_3 \ or \ c \end{cases}$$

Similarly, the formulas are combined into $\dfrac{(N-2)(4\alpha + \Phi_1 + \Phi_2 + \Phi_3)}{4} + \gamma_1 + \gamma_2 = 180°(N-2)$ . After values of $\Phi_1$, $\Phi_2$, and $\Phi_3$ are selected, a value of the farthest distance measurement angle $\alpha$ can be determined based on a known number N of surfaces and selected values of $\gamma_1$ and $\gamma_2$, and corresponding values of $\beta_1$, $\beta_2$, and $\beta_3$ can also be known.

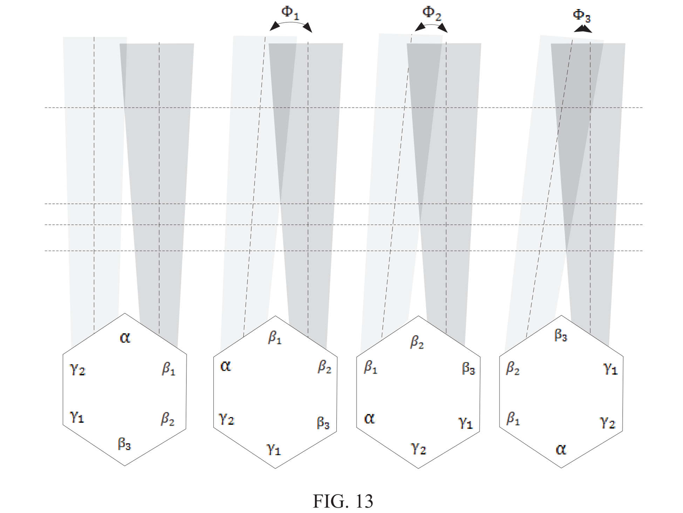

For example, N for $\dfrac{N}{4}$ with the remainder 2 is 6. FIG. 13 is a diagram of reflection of a six-surface polygon according to an embodiment of this application. In this case, the scanning module includes six reflective surfaces, and angles between the six reflective surfaces are $\alpha$, $\beta_1$, $\beta_2$, $\beta_3$, $\gamma_1$, and $\gamma_2$. When the scanning module rotates to $\alpha$, the optical axis of the transmitting field of view is parallel to the optical axis of the receiving field of view, as shown in the first panel of FIG. 13. When the scanning module rotates to $\beta_1$, the optical axis of the transmitting field of view is not parallel to the optical axis of the receiving field of view, as shown in the second panel of FIG. 13. In this case, there is an optical axis included angle $\Phi_1$, and $\Phi_1 = \beta_1 - \alpha$. When the scanning module rotates to $\beta_2$, the optical axis of the transmitting field of view is not parallel to the optical axis of the receiving field of view, and $L_2^{\beta_2} \leq L_1^{\beta_1}$, as shown in the third panel of FIG. 13. In this case, there is an optical axis included angle $\Phi_2$, and $\Phi_2 = \beta_2 - \alpha$. When the scanning module rotates to $\beta_3$, the optical axis of the transmitting field of view is not parallel to the optical axis of the receiving field of view, and $L_2^{\beta_3} \leq L_1^{\beta_2}$, as shown in the fourth panel of FIG. 13. In this case, there is an optical axis included angle $\Phi_3$, and $\Phi_3 = \beta_3 - \alpha$.

(4) When $\frac{N}{4}$ has the remainder 3, there are three additional angles, and the additional angles $\gamma_1$, $\gamma_2$, and $\gamma_3$ may be set to $\alpha$, $\beta_1$, $\beta_2$, $\beta_3$, or another proper value c, that is,

$$\begin{cases} \dfrac{(N-3)(\alpha + \beta_1 + \beta_2 + \beta_3)}{4} + \gamma_1 + \gamma_2 + \gamma_3 = 180°(N-2) \\ \beta_1 - \alpha = \Phi_1 \\ \beta_2 - \alpha = \Phi_2 \\ \beta_3 - \alpha = \Phi_3 \\ \gamma_1 = \alpha \; or \; \beta_1 \; or \; \beta_2 \; or \; \beta_3 \; or \; c \\ \gamma_2 = \alpha \; or \; \beta_1 \; or \; \beta_2 \; or \; \beta_3 \; or \; c \\ \gamma_3 = \alpha \; or \; \beta_1 \; or \; \beta_2 \; or \; \beta_3 \; or \; c \end{cases}$$

Similarly, the formulas are combined into $\frac{(N-3)(4\alpha + \Phi_1 + \Phi_2 + \Phi_3)}{4} + \gamma_1 + \gamma_2 + \gamma_3 = 180°(N-2)$ . After values of $\Phi_1$, $\Phi_2$, and $\Phi_3$ are selected, a value of the farthest distance measurement angle $\alpha$ can be determined based on a known number N of surfaces and selected values of $\gamma_1$, $\gamma_2$, and $\gamma_3$, and corresponding values of $\beta_1$, $\beta_2$, and $\beta_3$ can also be known.

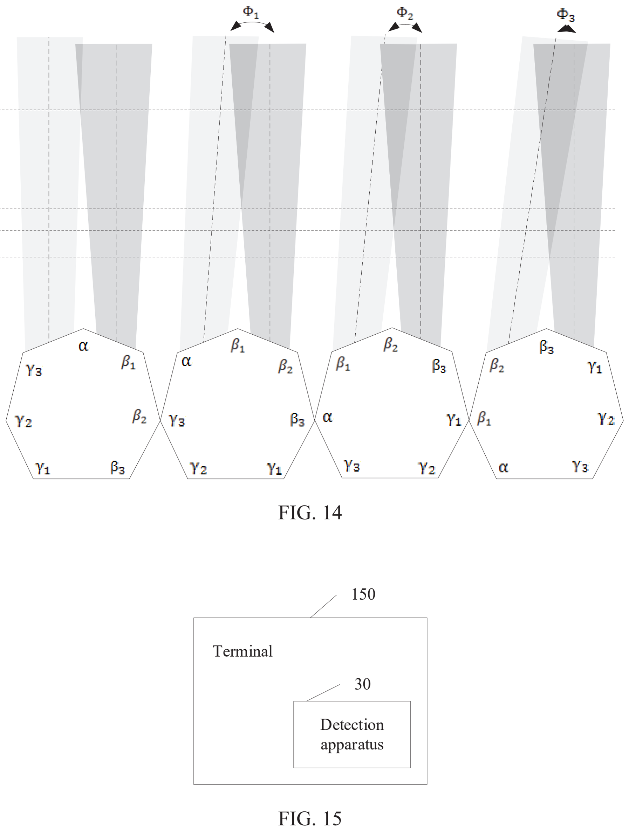

For example, N for $\frac{N}{4}$ with the remainder 3 is 7. FIG. 14 is a diagram of reflection of a seven-surface polygon according to an embodiment of this application. In this case, the scanning module includes seven reflective surfaces, and angles between the seven reflective surfaces are $\alpha$, $\beta_1$, $\beta_2$, $\beta_3$, $\gamma_1$, $\gamma_2$, and $\gamma_3$. When the scanning module rotates to $\alpha$, the optical axis of the transmitting field of view is parallel to the optical axis of the receiving field of view, as shown in the first panel of FIG. 14. When the scanning module rotates to $\beta_1$, the optical axis of the transmitting field of view is not parallel to the optical axis of the receiving field of view, as shown in the second panel of FIG. 14. In this case, there is an optical axis included angle $\Phi_1$, and $\Phi_1 = \beta_1 - \alpha$. When the scanning module rotates to $\beta_2$, the optical axis of the transmitting field of view is not parallel to the optical axis of the receiving field of view, and $L_2^{\beta_2} \leq L_1^{\beta_1}$, as shown in the third panel of FIG. 14. In this case, there is an optical axis included angle $\Phi_2$, and $\Phi_2 = \beta_2 - \alpha$. When the scanning module rotates to $\beta_3$, the optical axis of the transmitting field of view is not parallel to the optical axis of the receiving field of view, and $L_2^{\beta_3} \leq L_1^{\beta_2}$, as shown in the fourth panel of FIG. 14. In this case, there is an optical axis included angle $\Phi_3$, and $\Phi_3 = \beta_3 - \alpha$.

Only one to three examples of $\beta$ for blind-zone coverage are described above. For a scanning module with $N \geq 5$, there may be four or more angles for blind-zone coverage. Details are not described herein again.

A reflective polygon is used as an example of the scanning module in the foregoing illustrations. The scanning module may alternatively be a refractive polygon. Details are not described herein again.

In embodiments of this application, the scanning module of the detection apparatus includes at least three reflective surfaces and at least two end surfaces. The at least three reflective surfaces are perpendicular to the at least two end surfaces respectively. The scanning module is a polygon with different angles, that is, at least two included angles between the at least three reflective surfaces are different. The transmitting module of the detection apparatus may transmit a first laser beam through a first reflective surface of the scanning module. The receiving module of the detection apparatus may receive the returned first laser beam through a second reflective surface of the scanning module. Because the scanning module has at least two different included angles, a divergence field of view of the first laser beam and a receiving field of view of the receiving module have different overlapping starting positions, and there are two or more different overlapping regions in one scanning cycle, expanding a scanning range without providing a blind-zone coverage laser beam, that is, without adding an additional component and without consuming ranging energy, thereby reducing difficulty in manufacturing the detection apparatus and improving ranging effect.

FIG. 15 is a diagram of a structure of a terminal according to an embodiment of this community. The terminal 150 includes the foregoing detection apparatus.

Optionally, the terminal may be an intelligent terminal or transportation means such as a vehicle, an unmanned aerial vehicle, or a robot.

In the descriptions of this application, orientation or location relationships indicated by terms "left", "right", "vertical", "parallel", "non-parallel", and the like are orientation or location relationships based on the accompanying drawings, and are merely intended for conveniently describing this application and simplifying descriptions, rather than indicating or implying that a described apparatus or element needs to have a specific orientation or needs to be constructed and operated in a specific orientation, and therefore cannot be construed as a limitation on this application.

In embodiments of this application, the word "example" or "for example" or the like represents giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

In embodiments of this application, "at least one" means one or more, and "a plurality of" means two or more. "At least one of the following items (pieces)" or a similar expression thereof means any combination of these items, including a single item (piece) or any combination of a plurality of items (pieces). For example, at least one of a, b, or c may indicate: a, b, c, (a and b), (a and c), (b and c), or (a, b, and c), where a, b, and c may be singular or plural. The term "and/or" describes an association relationship between associated objects, and indicates that three relationships may exist. For example, A and/or B may indicate the following three cases: Only A exists, both A and B exist, and only B exists, where A and B may be singular or plural. The character "/" usually indicates an "or" relationship between the associated objects.

## Claims

1. A detection apparatus, comprising a transmitting module, a receiving module, and a scanning module, wherein

   the scanning module comprises at least three reflective surfaces and at least two end surfaces, the at least three reflective surfaces are perpendicular to the at least two end surfaces, and at least two included angles between the at least three reflective surfaces are different;
   the transmitting module is configured to transmit a first laser beam, and the first laser beam is transmitted through a first reflective surface of the scanning module; and
   the receiving module is configured to receive the first laser beam returned through a second reflective surface of the scanning module.

2. The detection apparatus according to claim 1, wherein the at least two included angles comprise a first included angle and a second included angle, an included angle between the first reflective surface and the second reflective surface is the first included angle, and the first included angle is less than the second included angle.

3. The detection apparatus according to claim 2, wherein an optical axis of the first laser beam is parallel to an optical axis of a receiving field of view of the receiving module.

4. The detection apparatus according to claim 1, wherein the at least two included angles comprise a first included angle and a second included angle, an included angle between the first reflective surface and the second reflective surface is the first included angle, and the first included angle is greater than the second included angle.

5. The detection apparatus according to claim 4, wherein an optical axis of the first laser beam is not parallel to an optical axis of a receiving field of view of the receiving module.

6. The detection apparatus according to claim 4 or 5, wherein an overlapping region between a transmitting field of view of the transmitting module and the receiving field of view of the receiving module is a first overlapping region when the included angle between the first reflective surface and the second reflective surface is the first included angle, the overlapping region between the transmitting field of view of the transmitting module and the receiving field of view of the receiving module is a second overlapping region when the included angle between the first reflective surface and the second reflective surface is the second included angle, and a combined region of the first overlapping region and the second overlapping region is a target scanning region.

7. The detection apparatus according to claim 6, wherein a position and size of the overlapping region are correlated with at least one of an optical axis included angle and transceiving parameters, the transceiving parameters comprise an initial distance between the optical axis of the first laser beam and the optical axis of the receiving field of view, a width of the first laser beam, a divergence angle of the first laser beam, a receiving aperture of the receiving module, and the field of view of the receiving module, and the optical axis included angle is an included angle between the optical axis of the first laser beam and the optical axis of the receiving field of view.

8. The detection apparatus according to claim 7, wherein the optical axis included angle is an included angle difference between the second included angle and the included angle between the first reflective surface and the second reflective surface.

9. The detection apparatus according to claim 7 or 8, wherein the first overlapping region is closer to the scanning module than the second overlapping region.

10. The detection apparatus according to any one of claims 7 to 9, wherein the at least two included angles further comprise a third included angle, the third included angle is greater than the first included angle, and the optical axis of the first laser beam is not parallel to the optical axis of the receiving field of view of the receiving module when the included angle between the first reflective surface and the second reflective surface is the third included angle.

11. The detection apparatus according to claim 10, wherein the overlapping region between the transmitting field of view of the transmitting module and the receiving field of view of the receiving module is a third overlapping region when the included angle between the first reflective surface and the second reflective surface is the third included angle, and the third overlapping region is closer to the scanning module than the first overlapping region.

12. The detection apparatus according to claim 10 or 11, wherein the at least two included angles further comprise a fourth included angle, the fourth included angle is greater than the third included angle, and the optical axis of the first laser beam is not parallel to the optical axis of the receiving field of view of the receiving module when the included angle between the first reflective surface and the second reflective surface is the fourth included angle.

13. The detection apparatus according to claim 12, wherein the overlapping region between the transmitting field of view of the transmitting module and the receiving field of view of the receiving module is a fourth overlapping region when the included angle between the first reflective surface and the second reflective surface is the fourth included angle, and the fourth overlapping region is closer to the scanning module than the third overlapping region.

14. The detection apparatus according to any one of claims 7 to 9, wherein the second included angle meets the following condition: a sum of the second included angle, the first included angle, and another included angle between the at least three reflective surfaces is a sum of interior angles of the end surface, and the second included angle is negatively correlated with an optical axis included angle corresponding to the first included angle.

15. The detection apparatus according to claim 10 or 11, wherein the second included angle meets the following condition: a sum of the second included angle, the first included angle, and another included angle between the at least three reflective surfaces is a sum of interior angles of the end surface, and the second included angle is negatively correlated with an optical axis included angle corresponding to the first included angle and an optical axis included angle corresponding to the third included angle.

16. The detection apparatus according to claim 12 or 13, wherein the second included angle meets the following condition: a sum of the second included angle, the first included angle, and another included angle between the at least three reflective surfaces is a sum of interior angles of the end surface, and the second included angle is negatively correlated with an optical axis included angle corresponding to the first included angle, an optical axis included angle corresponding to the third included angle, and an optical axis included angle corresponding to the fourth included angle.

17. The detection apparatus according to any one of claims 1 to 16, wherein the scanning module is a reflective polygon or a refractive polygon.

18. A terminal, wherein the terminal comprises the detection apparatus according to any one of claims 1 to 17.

19. The terminal according to claim 18, wherein the terminal is a vehicle, an unmanned aerial vehicle, or a robot.

Object space

Detection apparatus

Transmitting module

Regular polygon

Receiving module

Transmitting field of view

Overlapping region

Receiving field of view

FIG. 1

Object space

Detection apparatus

Transmitting module

M1

Regular polygon

Receiving module

M2

Transmitting field of view

Overlapping region

Receiving field of view

FIG. 2

FIG. 3

Overlapping starts

Overlapping starts

First
reflective
surface

Second
reflective
surface

First
reflective
surface

Second
reflective
surface

FIG. 4

L2

FIG. 5

FIG. 6

EP 4 682 587 A1

FIG. 7

FIG. 8

FIG. 9

FIG. 10

FIG. 11

FIG. 12

FIG. 13

FIG. 14

FIG. 15

## INTERNATIONAL SEARCH REPORT

| International application No. |
| --- |
| **PCT/CN2023/082039** |

| A. | CLASSIFICATION OF SUBJECT MATTER |
| --- | --- |

G01S17/08(2006.01)i

According to International Patent Classification (IPC) or to both national classification and IPC

| B. | FIELDS SEARCHED |
| --- | --- |

Minimum documentation searched (classification system followed by classification symbols)

IPC：G01S

Documentation searched other than minimum documentation to the extent that such documents are included in the fields searched

Electronic data base consulted during the international search (name of data base and, where practicable, search terms used)

CNABS; CNTXT; CNKI; 万方, WANFANG; 超星, CHAOXING; VEN; USTXT; EPTXT; WOTXT; IEEE: 探测, 发射, 接收, 反射面, 激光, 端面, 旋转, 多面镜, 柱面镜, 旋转镜, 柱镜, 夹角, 角度, 扫描, 大小, 光束, 交叠, 重叠, 光轴, rotat+, prism, laser, beam, transmit+, receiv+, shaft, scanning

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 217238376 U (WUHAN WANJI PHOTOELECTRIC TECHNOLOGY CO., LTD.) 19 August 2022 (2022-08-19) description, paragraphs [0033]-[0054], and figures 1-8 | 1-5, 17-19 |
| Y | CN 216209858 U (SHANGHAI INSTITUTE OF LASER TECHNOLOGY) 05 April 2022 (2022-04-05) description, paragraphs [0026]-[0031], and figures 1-6 | 1-5, 17-19 |
| A | WO 2021197170 A1 (HESAI TECHNOLOGY CO., LTD.) 07 October 2021 (2021-10-07) entire document | 1-19 |
| A | CN 112946666 A (LEISHEN INTELLIGENT SYSTEM CO., LTD.) 11 June 2021 (2021-06-11) entire document | 1-19 |
| A | CN 218331954 U (SHENZHEN GUANGMIAO SENSING TECHNOLOGY CO., LTD.) 17 January 2023 (2023-01-17) entire document | 1-19 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **20 October 2023** | **13 November 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/082039**

| Patent document cited in search report | | | Publication date (day/month/year) | Patent family member(s) | Publication date (day/month/year) |
|---|---|---|---|---|---|
| CN | 217238376 | U | 19 August 2022 | None | |
| CN | 216209858 | U | 05 April 2022 | None | |
| WO | 2021197170 | A1 | 07 October 2021 | None | |
| CN | 112946666 | A | 11 June 2021 | None | |
| CN | 218331954 | U | 17 January 2023 | None | |

Form PCT/ISA/210 (patent family annex) (July 2022)